# EUROPÄISCHE PATENTSCHRIFT

(11) **EP 1 321 580 B1**
(45) Veröffentlichungstag und Bekanntmachung des Hinweises auf die Patenterteilung: **13.02.2013**
(21) Anmeldenummer: 02028678.7
(22) Anmeldetag: 20.12.2002
(51) Int. Cl.: E01C 11/24, E01C 7/26, E01C 7/14, C09K 3/18, B01J 2/00

(54) **Verfahren und Mittel zur Verhinderung winterlicher Glättebildung auf Verkehrsflächen**
Method and product for preventing slippery road condition in winter
Méthode et produit pour la prévention de routes glissantes en hiver

(30) Priorität: 20.12.2001 DE 10163080
(43) Veröffentlichungstag der Anmeldung: 25.06.2003
(73) Patentinhaber: Momentive Specialty Chemicals GmbH, 58642 Iserlohn-Letmathe (DE)
(72) Erfinder: Kämereit, Wilhelm, 40229 Düsseldorf (DE); Suren, Josef, 33181 Bad Wünnenberg-Haaren (DE); Adolphs, Peter, Dr., 58708 Menden (DE)

(56) Entgegenhaltungen:
- EP-A- 0 332 803
- DE-A- 2 426 200
- DE-A- 4 000 097
- DE-A- 19 602 925
- US-A- 3 855 167

## Beschreibung

Die Erfindung betrifft ein verbessertes Verfahren zur Verhinderung winterlicher Glättebildung auf Verkehrsflächen durch Aufbringen einer Fahrbahnoberflächenschicht aus einem Mittel, das ein Auftaumittel enthält.

Aus DE-A 24 26 200 ist ein Mischgut zur Herstellung eines eine Eisbildung hemmenden und Schnee tauenden Straßenbelags bekannt, bei dem das asphalthaltige bzw. bituminöse Mischgut Teile enthält, die aus einer auftauenden Substanz und einer äußeren, wasserdichten Umhüllung bestehen. Beim Einsatz dieses Mischguts sind diese Teile in den Straßenbelag in der gesamten Dicke des Belags eingebaut. Sie werden durch den Abrieb freigelegt, die Umhüllung wird zerstört und die auftauende Substanz wird freigesetzt. Demnach wird die auftauende Substanz auch in warmen Jahreszeiten freigesetzt und ausgewaschen. In die entstehenden Hohlräume lagert sich Wasser ein, das in der Kälteperiode zu einer verstärkten Absprengung des Straßenbelags führt. Das dieser Erfindung entsprechende Mischgut ist daher weder umweltgerecht noch entspricht es den Anforderungen an die Haltbarkeit eines Straßenbelags.

Aus EP-A 153 269 und DE-A 41 29 621 ist ein Verfahren bekannt, bei dem zur Körnung einer bitumengebundenen Straßenbelagsmischung eine oder mehrere den Gefrierpunkt des Wassers erniedrigende Substanzen sowie hydrophobe Komponenten wie Polyurethan oder hydrophobierende, amorphe Siliciumdioxide eingegeben werden und diese Straßenbelagsmischungen als nachträgliche dünne Deckschichten auf Verkehrsflächen aufgebracht werden.

Die US 3,855,167 beschreibt die Herstellung eines Straßenbelages, bei dem mit Phenolharz beschichteter Sand eingesetzt wird. Dieser bewirkt eine gute Stabilität und gute Flusseigenschaften.

Die EP 0 332 803 verwendet beschichtete Auftaumittel deren Partikelgröße maximal 0,09 mm beträgt. Die Beschichtung besteht aus einem thermoplastischen Kunststoff.

Die DE 196 02 925 offenbart Zuschlagstoffe für Verkehrsflächen in Form eines Granulates im Bereich von 0,5 bis 5 mm. Wesentlicher Bestandteil ist ein Auftaumittel, was eine Primärkorngröße < 0,2 mm aufweist. Die Primärkörner sind mit Bitumen (kein kaltversprödendes Material) umhüllt und an ihren Berührungsstellen miteinander zu einem agglomerisierten Granulatkorn verklebt.

Die DE 40 00 097 offenbart geräuscharme frostsichere Fahrbahndecken, die durch Verwendung von Kunststoffabfällen und salzhaltigen Aschen, die gebunden sein können, hergestellt werden

Gemäß einer älteren deutschen Patentanmeldung (Aktenzeichen 101 17 437.3) wird auf fertig gestellte Verkehrsflächen vor der Frostperiode eine Bitumenemulsion aufgespritzt, die ein Auftaumittel enthält, das nach der Trocknung der Emulsion in der Bitumen-Trockenmasse eingebettet verbleibt und nach und nach infolge der Versprödung des Bitumens bei sinkenden Temperaturen und sich dabei bildenden Mikrorissen und durch Abrieb unterstützt freigegeben wird.

Es ist ein Nachteil aller dieser Verfahren, dass sowohl bei den hydrophobierenden Substanzen wie bei Bitumen die retardierende Wirkung bezüglich der Freigabe des Auftaumittels sehr gering ist. Die eingesetzten Auftaumittel werden bereits innerhalb weniger Wochen aus dem Belag herausgelöst, so dass die die Eisbildung verhindernde Wirkung deutlich nachlässt und oft bei Einsetzen von Frostperioden bereits nicht mehr gegeben ist.

Es ist daher Aufgabe der Erfindung, ein verbessertes Verfahren zur Verhinderung winterlicher Glättebildung auf Verkehrsflächen bereitzustellen, das in der Anwendung ähnlich einfach ist, wie die bekannten Verfahren, bei dem aber die Auftaumittel sehr langsam und möglichst nur bei Bedarf freigegeben werden, so dass der gewünschte Effekt möglichst lange anhält.

Die Lösung der Aufgabe erfolgt durch ein Verfahren gemäß der Ansprüche 1 und 2 sowie durch Mittel zur Durchführung des Verfahrens gemäß der Ansprüche 3 bis 11.

Es wurde gefunden, dass eine Freigabe von Auftaumitteln aus einer auf die Fahrbahn aufgebrachten, dünnen Fahrbahnoberflächenschicht sehr langsam und insbesondere je nach Verkehrsbelastung kontrolliert erfolgt, wenn das auf die Verkehrsfläche aufgebrachte Mittel ein Auftaumittel enthält, das mit einem temporär wasserundurchlässigen Feststoffmantel aus einem vernetzten Phenolharz umhüllt ist und das Auftaumittel in einer Körnung von maximal 1 mm vorliegt.

In der bevorzugten Ausführung ist der temporär wasserundurchlässige Feststoffmantel bei Temperaturen oberhalb 1°C geschlossen und bis zu einem gewissen Grad flexibel. Er hält das Auftaumittel vor Regenwasser geschützt. Außerdem vermindert die vorhandene Flexibilität einen Abrieb des wasserundurchlässigen Feststoffmantels und erhöht somit die Wirksamkeitsdauer des erfindungsgemäßen Mittels. Bei sinkenden Temperaturen versprödet der wasserundurchlässige Feststoffmantel mehr und mehr. Er wird rissig und er wird leichter durch Druck und Abrieb zerstört. Das umhüllte Auftaumittel wird langsam und während einer langen Zeitspanne und insbesondere je nach Verkehrsbelastung kontrolliert freigesetzt bzw. dem Angriff von Feuchtigkeit ausgesetzt und kann seine gefrierpunktserniedrigende Wirkung entfalten und damit die winterliche Glättebildung auf der Verkehrsfläche verhindern. Dadurch dass die Freigabe des Auftaumittels sehr langsam und je nach Verkehrsbelastung der Verkehrsfläche kontrolliert erfolgt, wird die Wirksamkeit des erfindungsgemäßen Mittels über eine lange Zeitspanne, in der Regel während einer gesamten Frostperiode aufrechterhalten.

Erfindungsgemäß wird daher vor einer Frostperiode, sowie bei Bedarf auch innerhalb einer Frostperiode auf eine saubere Verkehrsfläche in dünner Schicht ein Mittel aufgebracht, das aus einem mit dem Belag der Verkehrsflächen verträglichen Bindemittel besteht, das ein mit einem temporär wasserundurchlässigen Feststoffmantel umhülltes Auftaumittel sowie gegebenenfalls weitere Füll- und Zusatzstoffe enthält. Das aufzubringende Mittel kann eine fertig vorgemischte Mischung sein, die als solche auf die Verkehrsfläche aufgebracht wird. Es kann aber auch aus mehreren separaten Komponenten bestehen, die gleichzeitig auf die Verkehrsfläche aufgebracht werden und die erst auf der Verkehrsfläche fertig gemischt vorliegen.

Das mit dem Belag der Verkehrsflächen verträgliche Bindemittel ist im einfachsten Fall Bitumen und zwar sowohl Heißbitumen als auch eine Bitumenemulsion. Es kann aber auch Zement sein, der in Form einer kurz zuvor hergestellten Zementschlämme aufgebracht wird, oder eine härtbare oder nicht härtbare Kunststoffemulsion. Denkbar sind auch kunststoffmodifizierte Bitumen oder kunstharzmodifizierte Zementschlämme, insbesondere Zementschlämme, die emulgierte Epoxidharz-Härter-Gemische enthalten, wie sie z.B. auch zum Ausbessern von Spurrillen eingesetzt werden können.

Ist das Mittel eine fertig vorgemischte Mischung kann es in einfacher Weise durch Rakeln oder Streichen auf die Verkehrsflächen aufgebracht werden. Das bevorzugte Verfahren zum Aufbringen ist allerdings das Aufsprühen.

Besteht das Mittel aus mehreren separat gehaltenen Komponenten, so werden diese aus separaten Düsen gleichzeitig so auf die Verkehrsflächen aufgesprüht, dass sie dabei vollständig durchmischt werden.

Beispiele hierfür sind das gleichzeitige aber separate Aufsprühen einer Bitumenemulsion einerseits und des mit einem temporär wasserundurchlässigen Feststoffmantel umhüllten Auftaumittels andererseits, das seinerseits auch in Form einer separaten Dispersion vorliegen kann. Denkbar ist aber auch das gleichzeitige aber separate Aufsprühen einer Zementschlämme, einer Epoxidharzemulsion und einer von ihr getrennten Härterkomponente.

Auftaumittel sind wasserlösliche Stoffe, die mit Eis eine flüssige Kältemischung bilden können, die erst beim Erreichen einer deutlich unter 0°C liegenden Eutektikumstemperatur gefrieren. Beispiele hierfür sind wasserlösliche Salze, insbesondere Alkali- oder Erdalkalisalze, aber auch Polyalkohole, insbesondere Glykol oder Glycerin. Diese Auftaumittel können einzeln oder im Gemisch miteinander sowie im Gemisch mit anderen Füll- und Zusatzmitteln eingesetzt werden. Die bevorzugten Auftaumittel sind Natrium- oder Calciumchlorid. Die festen Auftaumittel liegen in einer Korngröße von maximal 1 mm, bevorzugt von maximal 0,3 mm vor.

Die Auftaumittel sind mit einem temporär wasserundurchlässigen Feststoffmantel umhüllt. Erfindungsgemäß bedeutet temporär, dass der Feststoffmantel wasserundurchlässig ist, wenn er nicht mechanisch, etwa durch Abrieb, verletzt wird und dass er eine temperaturabhängige Dichtigkeit aufweist. Er ist wasserundurchlässig bevorzugt bei Temperaturen oberhalb etwa 1°C.

Bei darunter sinkenden Temperaturen wird der Feststoffmantel mehr und mehr spröde und rissig. Hierbei und auch nach mechanischer Verletzung kann Feuchtigkeit durch den nicht mehr geschlossenen Feststoffmantel dringen und Auftaumittel herauslösen.

Diese Eigenschaften werden erreicht, wenn der temporär wasserundurchlässige Feststoffmantel aus einem kaltversprödenden, gehärteten (vernetzten) Phenolharz besteht. Bei der Herstellung des temporär wasserundurchlässigen Feststoffmantels aus einem vernetzten Phenolharz wurde der Kunststoff unter Zugabe eines Härters und entsprechender Temperatur (z. B. 120 °C bis 180 °C) gehärtet.

Das vernetzte Phenolharz wird bevorzugt hergestellt durch saure Kondensation einer phenolischen Verbindung mit Formaldehyd wobei das molare Verhältnis von phenolischer Verbindung zu Formaldehyd im Bereich von 1 : 0,2 bis 1: 0,8 liegt. Es sind dies bei Raumtemperatur halbfeste (niedermolekulare) bis feste (höhermolekulare) Produkte. Die niedermolekularen Produkte werden in der Regel unter Zugabe eines Härters verwendet, wobei die höhermolekularen Produkte ohne Zusatz eines Härters Anwendung finden können.

In jedem Fall entstehen Produkte, die sich ohne Einsatz von Lösemitteln und bei Temperaturen von 40 bis 160 °C zum Umhüllen von Feststoffen eignen, so dass nach der Umhüllung eine beständige, wasserundurchlässige Schicht um das Auftaumittel entstanden ist, die die gesuchte temperaturabhängige Dichtigkeit aufweist.

Zur Herstellung der umhüllten Auftaumittel werden die festen Auftaumittel, die gegebenenfalls mit geringen Mengen an flüssigen Auftaumitteln benetzt sein können, und die in einer Korngröße von max. 1 mm, bevorzugt von max. 0,3 mm, vorliegen, in an sich bekannter Weise mit etwa 2 bis 10 %, bevorzugt von 2 bis 5 % ihres Gewichts an Phenolharz umhüllt. Bevorzugt wird das erhitzte Auftaumittel z. B. entweder in einem Intensivmischsystem oder in einem Sanderhitzer mit den kaltversprödenden (festen bis halbfesten) Material intensiv vermischt. Durch den Mischvorgang schmilzt das kaltversprödende Material auf und umhüllt das Auftaumittel mit einer wasserundurchlässigen Schicht. Nach dem Abkühlen der Mischung erhält man ein rieselfähiges Produkt mit unterschiedlicher Korngröße. Zusätzlich können bei der Herstellung weitere Zusatzstoffe, wie z. B. Härter (5-15 Gew.% bezogen auf eingesetzten Novolak) und/oder aber auch Hydrophobierungsmittel (0,5 bis 5 Gew.% bezogen auf das eingesetzte Auftaumittel) zugegeben werden, letztere um die Rieselfähigkeit des Produktes zu verbessern. Solch hydrophobe oder hydrophobierte Trennmittel können z. B. Öl- oder Stearinsäure, Stearate oder einem Fettsäureamid sein. Eine besonders gute Verzögerung des Eindringens von Wasser wird erreicht, wenn das umhüllte Auftaumittel mit einem hydrophobierten Trennmittel, wie z.B. einem mit Stearat behandelten Erdalkalisalz, insbesondere mit Mg-Stearat behandeltem Calciumoxid behandelt ist.

Die erfindungsgemäßen Mittel werden dann in einfacher Weise erhalten durch Vermischen der mit dem Belag der Verkehrsflächen verträglichen Bindemittel mit den umhüllten Auftaumitteln sowie gegebenenfalls mit weiteren Füll- und Zusatzstoffen. Das Gewichtsverhältnis Bindemittel zu umhülltem Auftaumittel kann im Bereich von 200 zu 50 bis 100 zu 200 gewählt werden, wobei mit steigendem Bindemittelanteil eine Erhöhung der Abriebfestigkeit des Mittels erzielt wird.

Anhand eines Ausführungsbeispiels soll die Erfindung näher erläutert werden.

### Beispiel 1:

Der beheizbare Intensivmischer wurde auf eine Temperatur von 150 °C vorgeheizt. Das zu umhüllende Auftaumittel (Salz: Siede - Gewerbesalz mit einer Körnung von 0,125 - 0,7 mm - Sosel® Fa. Solvey, Deutschland) wurde in einem separaten Ofen ebenfalls auf eine Temperatur von 150 °C vorgeheizt. Der Novolak (niedrigmolekular; Bakelite® Harz 8505F - Fa. Bakelite AG; Deutschland) wurde separat auf 120 °C erwärmt, so dass eine niedrigviskose Harzschmelze resultierte.

4.000 g Salz wurden in dem Intensivmischer mit 200 g des Novolaks gemischt, wobei die Mischguttemperatur bei 140 °C - 150 °C lag. Nach einer Mischzeit von 10 Minuten war alles Salz gut vom Novolak benetzt, so dass dann 20 g Hexamethylentetramin als Härter untergemischt wurden. Unter intensivem Mischen setzte die Härtungsreaktion des Novolaks sofort ein, was durch eine intensive Gelbfärbung des Salzes gut zu beobachten war. Nach 5 Minuten Mischzeit wurden 120 g Mg-Stearat zugemischt, damit die Salzpartikel nicht zusammenkleben und das umhüllte Salz nach Verlassen des Mischers in einer ausreichend rieselfähigen Form vorlag.

### Beispiel 2:

Der beheizbare Intensivmischer wurde auf eine Temperatur von 130 °C und das zu umhüllende Salz (Siede - Gewerbesalz mit einer Körnung von 0,125 - 0,7 mm - Sosel® Fa. Solvey, Deutschland) auf 120 °C aufgeheizt.

4.000 g des Salzes wurden in den Mischer eingefüllt und 200 g eines höhermolekularen Novolaks (höhermolekular; Bakelite® Harz 0790K03 - Fa. Bakelite AG; Deutschland) in Pastillenform zugegeben. Unter intensivem Mischen schmilzt der Novolak innerhalb 3 - 5 Minuten auf und benetzt und umhüllt das Salz.

Nach 10 Minuten Mischzeit wurden 120 g Mg-Stearat zugegeben und homogen untergemischt. Nach einer Gesamtmischzeit von 20 Minuten wurde der Mischer entleert und das Salz zum Abkühlen ausgebreitet. Auf Raumtemperatur abgekühlt besitzt das Salz eine ausgezeichnete Rieselfähigkeit.

Durch Vermischen des umhüllten Auftaumittels entsprechend den Beispielen 1 und 2 mit 60 %-iger Bitumenemulsion im Gewichtsverhältnis Auftaumittel:Bitumenemulsion = 1:2 wird erfindungsgemäß ein Mittel erhalten, das es ermöglicht, Auftaumittel auf den Straßen rechtzeitig, d. h. vor Wintereinbruch, zu platzieren und temperaturabhängig - bei niedrigeren Temperaturen in stärkerem Umfang - zur Wirkung frei zu setzen. Die Nutzung dieser Möglichkeit führt zu einer erheblichen Reduzierung winterlicher Unfallgefahren, insbesondere bei plötzlich auftretendem Glatteis, sowie der Reduzierung der Umweltbelastung durch Auftaumittel.

Durchgeführte Tests belegen, dass bei kontinuierlichem Wasserkontakt (15 °C, 5 Wochen) der unbefahrenen Verkehrsflächen nur 5 Gew. % des Auftaumittels eluiert wurden. Im Vergleich mit derzeitiger Wintertechnik, konnte eine Reduzierung des Auftaumittels um über 80 % registriert werden.

## Patentansprüche

1. Verfahren zur Verhinderung winterlicher Glättebildung auf Verkehrsflächen durch Aufbringen einer Fahrbahnoberflächenschicht aus einem Mittel, das ein Auftaumittel enthält, das bei winterlicher Verkehrsbelastung langsam freigegeben wird, wobei dieses Mittel aus einem mit dem Belag der Verkehrsflächen verträglichen Bindemittel besteht, das ein mit einem temporär wasserundurchlässigen Feststoffmantel umhülltes Auftaumittel und gegebenenfalls weitere Füll- und Zusatzstoffe enthält, **dadurch gekennzeichnet, dass** der temporär wasserundurchlässige Feststoffmantel des Auftaumittels aus einem vernetzten Phenolharz besteht und das Auftaumittel in einer Körnung von maximal 1 mm vorliegt.

2. Verfahren nach Anspruch 1, **dadurch gekennzeichnet, dass** das Mittel bei der Applikation auf der Verkehrsfläche durch gleichzeitiges Aufbringen des mit dem Belag der Verkehrsflächen verträglichen Bindemittels und des mit dem vernetzten Phenolharz umhüllten Auftaumittels hergestellt wird.

3. Mittel zur Durchführung des Verfahrens nach den Ansprüchen 1 und 2, bestehend aus einem mit dem Belag der Verkehrsflächen verträglichen Bindemittel, das ein mit einem temporär wasserundurchlässigen Feststoffmantel umhülltes Auftaumittel und gegebenenfalls weitere Füll- und Zusatzstoffe enthält, **dadurch gekennzeichnet, dass** der temporär wasserundurchlässige Feststoffmantel des Auftaumittels aus einem vernetzten Phenolharz besteht und das Auftaumittel in einer Körnung von maximal 1 mm vorliegt

4. Mittel nach Anspruch 3, **dadurch gekennzeichnet, dass** das mit dem Belag der Verkehrsflächen verträgliche Bindemittel Bitumen ist.

5. Mittel nach Anspruch 3, **dadurch gekennzeichnet, dass** das mit dem Belag der Verkehrsflächen verträgliche Bindemittel Bitumen ist, das in Form einer BitumenEmulsion vorliegt und dass das Mittel erst bei der Applikation auf der Verkehrsfläche durch gleichzeitiges Aufbringen des umhüllten Auftaumittels und des Bindemittels hergestellt wird.

6. Mittel nach Anspruch 3, **dadurch gekennzeichnet, dass** das mit dem Belag der Verkehrsflächen verträgliche Bindemittel Bitumen ist, das in Form einer Bitumenemulsion vorliegt und das mit dem umhüllten Auftaumittel vorgemischt vorliegt.

7. Mittel nach Anspruch 3, **dadurch gekennzeichnet, dass** das mit dem Belag der Verkehrsflächen verträgliche Bindemittel Zement ist.

8. Mittel nach einem oder mehreren der Ansprüche 3 bis 7, **dadurch gekennzeichnet, dass** das vernetzte Phenolharz des Auftaumittels eine temperaturabhängige Dichtigkeit aufweist.

9. Mittel nach Anspruch 3, **dadurch gekennzeichnet, dass** das vernetzte Phenolharz des Auftaumittels aus einem Phenolharz besteht, das hergestellt ist durch saure Kondensation einer phenolischen Verbindung mit Formaldehyd, wobei das molare Verhältnis von phenolischer Verbindung zu Formaldehyd im Bereich von 1 : 0,2 bis 1: 0,8 liegt.

10. Mittel nach einem oder mehreren der Ansprüche 3 bis 9, **dadurch gekennzeichnet, dass** das Auftaumittel in einer Körnung von maximal 0,3 mm vorliegt.

11. Mittel nach einem oder mehreren der Ansprüche 3 bis 10, **dadurch gekennzeichnet, dass** das umhüllte Taumittel zusätzlich mit einem hydrophoben oder hydrophobierten Trennmittel behandelt ist.

## Claims

1. Method of preventing traffic surfaces from becoming slippery in winter, through application of a roadway surface layer made from a composition which comprises a thawing agent which is slowly released under traffic load in winter, this composition being composed of a binder which is compatible with the traffic surfaces and which comprises a thawing agent, enveloped in a temporarily water-impermeable solid-material jacket, and, where appropriate, further fillers and additives, **characterized in that** the temporarily water-impermeable solid-material jacket of the thawing agent is composed of a crosslinked phenolic resin and the thawing agent is in a particle size of not more than 1 mm.

2. Method according to Claim 1, **characterized in that** the composition is produced during application to the traffic surface by simultaneous application of the binder which is compatible with the traffic surfaces and of the thawing agent enveloped in the crosslinked phenolic resin.

3. Composition for implementing the method according to Claims 1 and 2, composed of a binder which is compatible with the traffic surfaces and which comprises a thawing agent, enveloped in a temporarily water-impermeable solid-material jacket, and, where appropriate, further fillers and additives, **characterized in that** the temporarily water-impermeable solid-material jacket of the thawing agent is composed of a crosslinked phenolic resin and the thawing agent is in a particle size of not more than 1 mm.

4. Composition according to Claim 3, **characterized in that** the binder which is compatible with the traffic surfaces is bitumen.

5. Composition according to Claim 3, **characterized in that** the binder which is compatible with the traffic surfaces is bitumen which is in the form of a bitumen emulsion and **in that** the composition is produced only on application to the traffic surface, by simultaneous application of the enveloped thawing agent and of the binder.

6. Composition according to Claim 3, **characterized in that** the binder which is compatible with the traffic surfaces is bitumen which is in the form of a bitumen emulsion and is present as a premix with the enveloped thawing agent.

7. Composition according to Claim 3, **characterized in that** the binder which is compatible with the traffic surfaces is cement.

8. Composition according to one or more of Claims 3 to 7, **characterized in that** the crosslinked phenolic resin of the thawing agent has a temperature-dependent imperviousness.

9. Composition according to Claim 3, **characterized in that** the crosslinked phenolic resin of the thawing agent is composed of a phenolic resin prepared by acidic condensation of a phenolic compound with formaldehyde, in which the molar ratio of phenolic compound to formaldehyde is situated within the range from 1:0.2 to 1:0.8.

10. Composition according to one or more of Claims 3 to 9, **characterized in that** the thawing agent is in a particle size of not more than 0.3 mm.

11. Composition according to one or more of Claims 3 to 10, **characterized in that** the enveloped thawing agent has been additionally treated with a hydrophobic or hydrophobicized release agent.

## Revendications

1. Procédé pour empêcher les routes glissantes en hiver par application d'une couche de surface de chaussée constituée d'un agent contenant un agent dégivrant, qui est libéré lentement lors de la circulation sur les routes en hiver, cet agent étant constitué d'un liant compatible avec le revêtement des routes, qui contient un agent dégivrant enrobé par une enveloppe solide temporairement imperméable à l'eau et éventuellement des charges et des additifs supplémentaires, **caractérisé en ce que** l'enveloppe solide temporairement imperméable à l'eau de l'agent dégivrant est constituée d'une résine de phénol réticulée et l'agent dégivrant se présente en une taille de grain d'au plus 1 mm.

2. Procédé selon la revendication 1, **caractérisé en ce que** l'agent est fabriqué lors de l'application sur la route par application simultanée du liant compatible avec le revêtement des routes et de l'agent dégivrant enrobé par la résine de phénol réticulée.

3. Agent pour la réalisation du procédé selon les revendications 1 et 2, constitué d'un liant compatible avec le revêtement des routes, qui contient un agent dégivrant enrobé par une enveloppe solide temporairement imperméable à l'eau et éventuellement des charges et des additifs supplémentaires, **caractérisé en ce que** l'enveloppe solide temporairement imperméable à l'eau de l'agent dégivrant est constituée d'une résine de phénol réticulée et l'agent dégivrant se présente en une taille de grain d'au plus 1 mm.

4. Agent selon la revendication 3, **caractérisé en ce que** le liant compatible avec le revêtement des routes est un bitume.

5. Agent selon la revendication 3, **caractérisé en ce que** le liant compatible avec le revêtement des routes est un bitume, qui se présente sous la forme d'une émulsion de bitume, et **en ce que** l'agent n'est fabriqué que lors de l'application sur la route par application simultanée de l'agent dégivrant enrobé et du liant.

6. Agent selon la revendication 3, **caractérisé en ce que** le liant compatible avec le revêtement des routes est un bitume, qui se présente sous la forme d'une émulsion de bitume et qui se présente sous forme pré-mélangée avec l'agent dégivrant enrobé.

7. Agent selon la revendication 3, **caractérisé en ce que** le liant compatible avec le revêtement des routes est un ciment.

8. Agent selon une ou plusieurs des revendications 3 à 7, **caractérisé en ce que** la résine de phénol réticulée de l'agent dégivrant présente une imperméabilité dépendante de la température.

9. Agent selon la revendication 3, **caractérisé en ce que** la résine de phénol réticulée de l'agent dégivrant est constituée d'une résine de phénol qui est fabriquée par condensation acide d'un composé phénolique avec du formaldéhyde, le rapport molaire entre le composé phénolique et le formaldéhyde se trouvant dans la plage allant de 1:0,2 à 1:0,8.

10. Agent selon une ou plusieurs des revendications 3 à 9, **caractérisé en ce que** l'agent dégivrant se présente en une taille de grain d'au plus 0,3 mm.

11. Agent selon une ou plusieurs des revendications 3 à 10, **caractérisé en ce que** l'agent dégivrant enrobé est également traité avec un agent antiadhésif hydrophobe ou hydrophobé.
